# EUROPEAN PATENT SPECIFICATION

(11) **EP 0 437 350 B1**
(45) Date of publication and mention of the grant of the patent: **22.03.1995**
(21) Application number: 91300149.1
(22) Date of filing: 09.01.1991
(51) Int. Cl.: H04Q 11/04

(54) **Distributed concentrating telecommunications system**
Telekommunikationssystem mit verteilter Konzentration
Système de télécommunication à concentration distribuée

(30) Priority: 11.01.1990 GB 9000606
(43) Date of publication of application: 17.07.1991
(73) Proprietor: NORTHERN TELECOM LIMITED, Montreal, Quebec H2Y 3Y4 (CA)
(72) Inventor: Rowe, Jeremy Mark Tarrant, Harlow, Essex CM19 4PL (GB); Mauger, Roy Harold, Enfield, Middlesex EN2 67R (GB); Hay, Bryan George, Stansted, Essex CM24 8DT (GB)
(74) Representative: Dennis, Mark Charles

(56) References cited:
- EP-A- 0 303 093
- US-A- 4 713 806
- US-A- 4 768 188

## Description

This invention relates to telecommunications systems and in particular to TDM/TDMA communications networks.

In a TDM/TDMA network data transmission from the exchange to the subscribers employs time-division multiplexing (TDM) whereas return transmissions uses time-division multiple access (TDMA). One example of such a network is referred to as TPON (Telephony over a Passive Optical Network) The number of subscribers which can be served by such a passive distribution network is typically 128. The present invention aims to provide a system which allows higher numbers of subscribers to be served than hitherto.

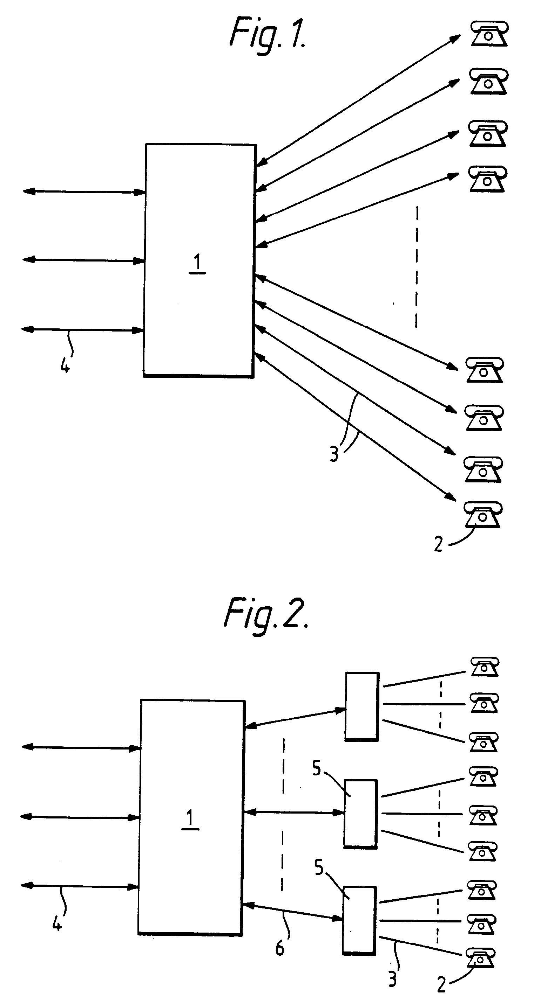

In conventional telecommunications networks, as illustrated schematically in Fig 1, exchange equipments 1 concentrate traffic from subscribers 2 which are each connected to the exchange equipment via lines 3. This means that the number of network channels 4 required by the exchange equipment 1 can be fewer than the number of subscriber channels (lines 3) provided. The concentration operation is thus taking advantage of the statistics of subscriber demand for channels. The result is a saving of fixed network capacity requirements.

There are currently proposals where the subscribers are no longer directly connected to the exchange equipment 1 as in Fig 1 but are connected to remote processing nodes 5 (Fig 2) each of which multiplexes the subscriber traffic from a plurality of subscribers onto a single, higher bandwidth, respective channel 6 which is coupled to the exchange equipment 1.

A system of this type is described in specification No. US-A-4,768,188. In this arrangement an optical fibre or fibres connect a central office to a plurality of remote units which are located near subscriber populations. To accommodate the demand access, the fibre bandwidth can be redistributed dynamically among the remote units at high speed and controlled by the central office.

According to the present invention there is provided a telecommunications system, including groups of remote processing nodes (5) each serving a respective plurality of subscribers (2), point-to-multipoint passive optical fibre networks (7) each associated with a respective group of remote processing nodes, local TDMA controllers (8) one associated with each said passive optical network, and a network interface (9) whereby the local TDMA controllers are provided with access to a plurality of exchange network channels (4), wherein the remote processing nodes, the passive optical networks and the local TDMA controllers together provide an intelligent transmission network, characterised in that said intelligent network is adapted to allocate bandwidth to each remote processing node corresponding to the demand at that node, that the remote processing nodes are such as to recognise changes in transmission bandwidth demand by the subscribers and to signal such changes to the associated TDMA controller whereby to achieve the transmission bandwidth allocation, and that each said remote processing node performs concentration of telecommunications traffic.

An embodiment of the invention will now be described with reference to the accompanying drawings, in which:
Fig. 1 illustrates, schematically, a conventional basic network arrangement;
Fig. 2 illustrates, schematically, a network in which subscribers are not directly connected to exchange equipment;
Fig. 3 illustrates, schematically, a network supporting a distributed concentrating system (a remote concentrating TDMA network).

In contrast to the previous proposals we propose, however, to devolve sufficient intelligence to the remote processing nodes such that they are themselves capable of performing concentration (as well as multiplexing). This proposal is especially relevant to the situation where the exchange equipment is connected to the remote processing nodes via an intelligent transmission network such that the capacity allocated to each remote node can be changed on demand. In general terms, however, we propose a system of distributed processing nodes performing telecommunications traffic concentration.

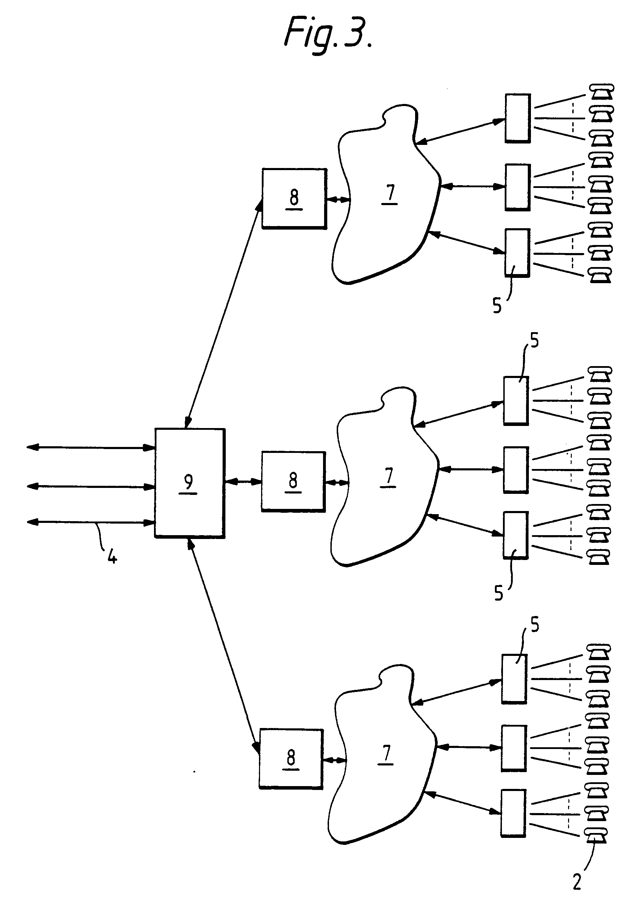

In particular we propose that the intelligent network supporting such a "distributed concentrating" system be a TDM/TDMA network, where the communication medium can be any point-to-multipoint network, such as a passive fibre-optic network 7 (Fig 3). In this case there is a local (TDMA) controller (base station) 8 associated with each passive network 7, the associated plurality of remote processing nodes (out-stations) 5 and the associated subscribers 2. The local controllers 8 are connected to an interface 9 to the network channels 4. In such an intelligent network, transmission bandwidth can be flexibly allocated between the various remote nodes that are associated with any local controller. The remote nodes recognise changes in subscriber demands and signal such events to the respective controller so that the transmission bandwidth may be suitably re-allocated. As a result of performing concentration at the remote nodes there will be a significant increase in the number of subscribers that the network is able to serve, which is particularly useful for TDM/TDMA networks. As well as concentration at the remote nodes 5 as shown, concentration can also be performed at the base stations 8, i.e. on both "sides" of the network 7. It will be appreciated from the above that we are proposing use of a passive optical network as part of a distributed concentrator.

Attention is directed to our copending GB Application No 9000605.7 (Serial No ) (J M T Rowe - B G Hay 2-1) which relates to a frame structure allowing flexible allocation of capacity in a network, particularly a TDM/TDMA network.

## Claims

1. A telecommunications system, including groups of remote processing nodes (5) each serving a respective plurality of subscribers (2), point-to-multipoint passive optical fibre networks (7) each associated with a respective group of remote processing nodes, local TDMA controllers (8) one associated with each said passive optical network, and a network interface (9) whereby the local TDMA controllers are provided with access to a plurality of exchange network channels (4), wherein the remote processing nodes, the passive optical networks and the local TDMA controllers together provide an intelligent transmission network, characterised in that said intelligent network is adapted to allocate bandwidth to each remote processing node corresponding to the demand at that node, that the remote processing nodes are such as to recognise changes in transmission bandwidth demand by the subscribers and to signal such changes to the associated TDMA controller whereby to achieve the transmission bandwidth allocation, and that each said remote processing node performs concentration of telecommunications traffic.

## Patentansprüche

1. Telekommunikationssystem mit Gruppen von entfernt angeordneten Verarbeitungsknoten (5), die jeweils eine jeweilige Vielzahl von Teilnehmern (2) versorgen, mit passiven Punkt-zu-Mehrpunkt-Lichtleitfaser-Netzen (7), die jeweils einer jeweiligen Gruppe von entfernt angeordneten Verarbeitungsknoten zugeordnet sind, mit örtlich angeordneten TDMA-Steuergeräten (8), von denen jeweils eines einem der passiven Lichtleitfaser-Netze zugeordnet ist, und mit einer Netz-Schnittstelle (9), wodurch die örtlich angeordneten TDMA-Steuergeräte mit einem Zugriff auf eine Vielzahl von Vermittlungsnetzkanälen (4) versehen sind, wobei die entfernt angeordneten Verarbeitungsknoten, die passiven Lichtleitfaser-Netze und die örtlich angeordneten TDMA-Steuergeräte zusammen ein intelligentes Übertragungsnetz ergeben,
dadurch gekennzeichnet, daß das intelligente Netz jedem entfernt angeordneten Verarbeitungsknoten eine Bandbreite entsprechend dem Bedarf an diesem Knoten zuteilen kann, daß die entfernt angeordneten Verarbeitungsknoten derart sind, daß sie Änderungen hinsichtlich des Übertragungsbandbreitenbedarfes durch die Teilnehmer erkennen und derartige Änderungen dem zugehörigen TDMA-Steuergerät signalisieren, wodurch die Übertragungsbandbreiten-Zuteilung erzielt wird, und daß jeder entfernt angeordnete Verarbeitungsknoten eine Konzentration des Telekommunikationsverkehrs ausführt.

## Revendications

1. Système de télécommunications, comprenant des groupes de noeuds distants de traitement (5) desservant chacun un nombre respectif d'abonnés (2), des réseaux à fibres optiques passifs (7) du type point à point ou multipoint associés chacun à un groupe respectif de noeuds distants de traitement, des organes locaux de commande TDMA (8) associés chacun à un réseau optique passif, et une interface (9) de réseau telle que les organes locaux de commande TDMA ont accès à plusieurs canaux (4) du réseau d'un central, dans lequel les noeuds distants de traitement, les réseaux optiques passifs et les organes locaux de commande TDMA forment ensemble un réseau intelligent de transmission, caractérisé en ce que le réseau intelligent est adapté à l'affectation de la largeur de bande à chaque noeud distant de traitement d'une manière correspondant à la demande de ce noeud, en ce que les noeuds distants de traitement sont tels qu'ils reconnaissent les changements de demande de largeur de bande de transmission par les abonnés et qu'ils signalent ces changements à l'organe associé de commande TDMA de manière que l'affectation de la largeur de bande de transmission soit effectuée, et en ce que chacun des noeuds distants de traitement exécute la concentration du trafic de télécommunications.
